(19) **Europäisches Patentamt**

**European Patent Office**

**Office européen des brevets**

(11) Publication number: **0 101 367**

**B2**

(12) # NEW EUROPEAN PATENT SPECIFICATION

(45) Date of publication of the new patent specification:
**13.09.89**

(21) Application number: **83401598.4**

(22) Date of filling: **02.08.83**

(51) Int. Cl.⁴: **B 60 T 8/28**

(54) **Braking corrector responsive to deceleration.**

(30) Priority: **09.08.82 FR 8213850**

(43) Date of publication of application:
**22.02.84 Bulletin 84/8**

(45) Publication of the grant of the patent:
**26.02.86 Bulletin 86/9**

(45) Mention of the opposition decision:
**13.09.89 Bulletin 89/37**

(84) Designated Contracting States:
**DE GB IT SE**

(56) References cited:
**DE-A-1 555 435**
**DE-A-3 021 229**
**DE-A-3 041 879**
**DE-C-470 944**
**US-A-3 664 713**

(73) Proprietor: **BENDIX France, 126, rue de Stalingrad,
F-93700 Drancy (FR)**

(72) Inventor: **Carre, Jean- Jaques, 59 Boulevard de
l'Est, F-93340 Le Raincy (FR)**
Inventor: **Pressaco, Pierre, 45 rue Emile Zola,
F-93120 La Courneuve (FR)**

(74) Representative: **Lejet, Christian, Division
Technique Service Brevets BENDIX Europe 126,
rue de Stalingrad, F-93700 Drancy (FR)**

EP 0 101 367 B2

LIBER, STOCKHOLM 1989

## Description

The invention concerns braking correctors responsive to deceleration.

Numerous devices of this type are known in which a corrector valve is coupled to an inertia weight which is sensitive to deceleration and is capable of being displaced against return means when a predetermined deceleration is exceeded to cause the closure of said valve.

Two main classes of such return means are known, the first consisting of mounting the inertia weight on a ramp inclined relative to the horizontal, and the second consisting of providing a spring which acts on the inertia weight.

In the first case, it is observed that the returning force due to the displacement of the weight along a ramp disappears when the vehicle is subject to vertical shocks or vibrations. In fact, such phenomena, which occur when driving over uneven ground, cause the weight to lose contact with the ramp and even a slight deceleration causes the displacement of the weight and the closure of the valve.

In the second case, the presence of the spring introduces undesirable rubbing during the displacement of the weight, generally constructed in the form of a ball, especially when the low value of the inertia forces acting on the latter are considered. It is then observed that the device lacks reliability, and also that its construction is relatively complex, principally when an adjustment must be provided for the calibration of the spring.

It is known from DE-A-1 555 435 a valve in which a magnet is freely mounted in a passage for movement towards and away from an inertia member. One end of a lever pivoted in the body of the valve is in rocking engagement with the magnet and the other end is in rocking engagement with an extension of a differential piston. The magnet is normally spaced from the inertia member at such a distance that its effect on the movement of the inertia member is negligible, but when the hydraulic pressure is increased sufficiently to move the differential piston, the magnet is moved towards the inertia member and retards its movement towards the seating so that the closing of the valve is delayed in proportion to the line pressure and hence to the vehicle loading.

The present invention proposes a braking corrector responsive to the deceleration of a vehicle comprising a casing, a corrector valve opening and an inertia weight mounted so as to move inside said casing, along an axis, against a return means in response to a predetermined deceleration of said vehicle to control said valve opening, said return means comprising at least one magnet positioned at the rear, with regard to the normal direction of motion of the vehicle, of said inertia weight, the latter being made of magnetic material and said casing being of non-magnetic material (see DE-A-1 555 435), characterized in that the corrector further comprises means mounted so as to be moveable laterally with respect to the said axis as a function of the load of the vehicle, the lateral movement of the means producing a corresponding variation in the return force exerted on the inertia weight by the return means.

The features and advantages of the invention will emerge more clearly from perusal of the following description, with reference to the accompanying drawings, in which:

Figure 1 is a longitudinal section of a single circuit corrector according to the invention; and

Figure 2 is a variant of the embodiment shown in Figure 1.

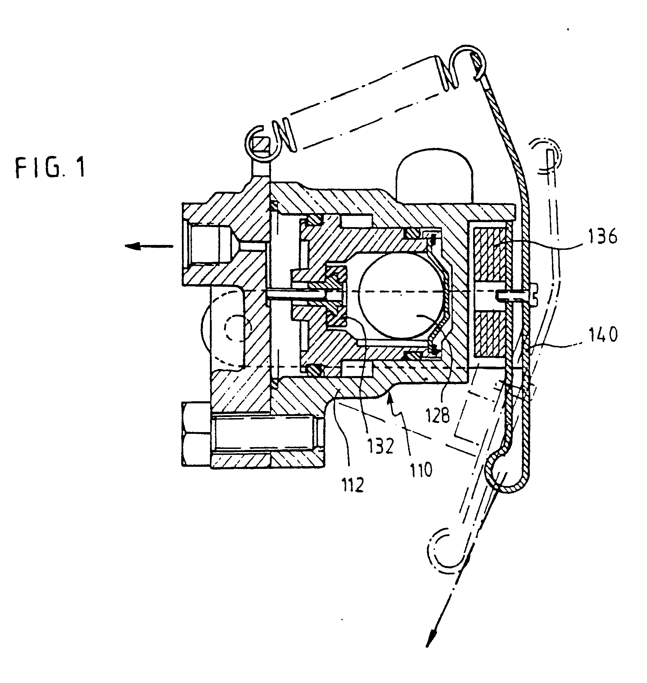

The corrector 110 shown in Figure 1 consists of a casing 112 in which a stepped cavity is defined. Two ports for the inlet and the outlet open into the two ends of the cavity in two chambers for the inlet and the outlet, respectively.

A stepped piston is mounted so as to slide in the cavity between the inlet chamber and the outlet chamber. A cylindrical housing inside the piston communicates with the inlet chamber and houses a spherical inertia weight, or ball, 128. A passage joins the housing to the outlet chamber. A valve seat 132 is mounted at the mouth of this passage towards the housing, the ball 128 itself constituting a valve poppet capable of cooperating with the seat 132.

Lastly, the corrector 110 incorporates return means exerting on the ball 128 a return force directed away from the seat 132. The return means consists of a magnet 136 fixed to the casing 112 at the rear of the ball 128, with regard to the direction of motion of the vehicle. The ball 128 is made of magnetic material and the casing 112 and the piston are made of non-magnetic material.

According to the invention, the magnet 136 is mounted on an arm 140 which oscillates relative to the casing 112 and the arm 140 is linked to the suspension device of the vehicle (not shown).

In this way, the restoring force exerted by the magnet 136 on the ball 128 will be variable as a function of the load on the vehicle, as will also the deceleration, which, when exceeded, will cause the ball to leave its rest position and come to be applied to the seat 132.

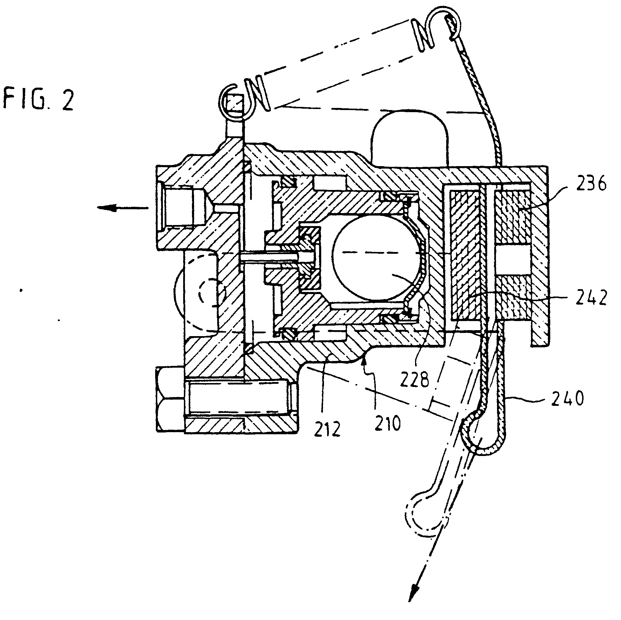

In the variant illustrated in Figure 2, in which identical components carry the same reference numbers increased by the value 100, the magnet 236 is fixed to the casing 212, and the arm 240, oscillating relative to the casing as a function of the load on the vehicle, carries a component 242 made of a material possessing a finite magnetic resistance. In this way, according to the position of the component 242 relative to the ball 228 and to the magnet 236, the force exerted by the latter on the former will be variable as a function of the load on the vehicle.

For the two embodiments described above, the magnet 136, 236 could also be constructed in the form of an electromagnet (not shown) controlled as a function of various parameters of the operation of the vehicle and/or of its braking system, or again as a combination of permanent magnet plus electromagnet (also not shown).

## Claims

1. A braking corrector responsive to the deceleration of a vehicle comprising a casing (112, 212) a corrector valve opening (132, 232) and an inertia weight (128, 228) mounted so as to move inside said casing, along an axis, against a return means (136, 236) in response to a predetermined deceleration of said vehicle to control said valve opening, said return means (136, 236) comprising at least one magnet (136, 236) positioned at the rear, with regard to the normal direction of motion of the vehicle, of said inertia weight (128, 228), the latter being made of magnetic material and said casing being of non-magnetic material, characterised in that the corrector further comprises means (136, 242) mounted so as to be moveable laterally with respect to the said axis as a function of the load of the vehicle, the lateral movement of the means (136, 242) producing a corresponding variation in the return force exerted on the inertia weight (128, 228) by the return means.

2. Braking corrector as claimed in claim 1, characterised in that said means (136) comprises the magnet (136).

3. Braking corrector as claimed in claim 1, characterised in that said means (242) comprises a component (242) made of material possessing finite magnetic resistance interposed between the magnet (236) and the inertia weight (228).

4. Braking corrector as claimed in any one of claims 1 to 3 characterised in that the magnet (136, 236) comprises a combination of a permanent magnet and an electromagnet.

## Patentansprüche

1. Bremsregler, der auf die Fahrzeugverzögerung anspricht, mit einem Gehäuse (112, 212), einer Reglerventilöffnung (132, 232) und einer Trägheitsmasse (128, 228), die so gelagert ist, daß sie innerhalb des Gehäuses auf einer Achse entgegen Rückholmitteln (136, 236) in Abhängigkeit von einer vorgegebenen Fahrzeugverzögerung bewegbar ist, um die Ventilöffnung zu steuern, wobei die Rückholmittel (136, 236) mindestens einen Magneten (136, 236) aufweisen, der - bezüglich der normalen Bewegungsrichtung des Fahrzeuges - an der Rückseite der Trägheitsmasse (128, 228) angeordnet ist, wobei die letztere aus magnetischem Material und das Gehäuse aus nichtmagnetischem Material besteht, dadurch gekennzeichnet, daß der Regler ferner Mittel (136, 242) aufweist, die so gelagert sind, daß sie bezüglich der besagten Achse in Abhängigkeit von der Fahrzeuglast seitlich bewegbar sind, wobei die seitliche Bewegung dieser Mittel (136, 242) eine entsprechende Änderung der Rückholkraft erzeugt, die von den Rückholmitteln auf die Trägheitsmasse (128, 228) ausgeübt wird.

2. Bremsregler nach Anspruch 1, dadurch gekennzeichnet, daß die besagten Mittel (136) aus dem Magneten (136) bestehen.

3. Bremsregler nach Anspruch 1, dadurch gekennzeichnet, daß die besagten Mittel (242) aus einer zwischen dem Magneten (236) und der Trägheitsmasse (228) angeordneten Komponente (242) bestehen, die aus einem Material besteht, das einen endlichen magnetischen Widerstand besitzt.

4. Bremsregler nach einem der Ansprüche 1 - 3, dadurch gekennzeichnet, daß der Magnet (136, 236) eine Kombination aus einem Dauermagneten und einem Elektromagneten ist.

## Revendications

1. Correcteur de freinage asservi à la décélération d'un véhicule comprenant un boîtier (112, 212), une ouverture de valve (132, 232) et une masse d'inertie (128, 228) montée de façon à se déplacer à l'intérieur du boîtier, selon un axe, à l'encontre d'un moyen de rappel (136, 236) en réponse à une décélération prédéterminée du véhicule pour commander l'ouverture de la valve, le moyen de rappel (136, 236) comprenant au moins un aimait (136, 236) positionné à l'arrière, par rapport au sens normal de déplacement du véhicule, de la masse d'inertie (128, 228) cette masse étant constituée d'un matériau magnétique et le boîtier étant constitué d'un matériau non magnétique, caractérisé en ce que le moyen de rappel (136, 242) est monté de façon à se déplacer latéralement par rapport à l'axe en fonction la charge du véhicule, le mouvement latéral du moyen de rappel (136, 242) produisant une variation correspondante dans la force de rappel exercée sur la masse d'inertie (128, 228) par le moyen de rappel.

2. Correcteur de freinage selon la revendication 1, caractérisé en ce que le moyen de rappel est un aimant (136).

3. Correcteur de freinage selon la revendication 1, caractérisé en ce que le moyen (242) est composé d'un élément constitué d'un matériau possédant une résistance magnétique limitée interposé entre l'aimant (236) et la masse d'inertie (228).

4. Correcteur de freinage selon les revendications 1, 2, 3, caractérisé en ce que l'aimant (136, 236) est une combinaison d'un aimant permanent et d'un électro-aimant.

EP 0 101 367 B2

FIG. 1

136

140

128

132

110

112

FIG. 2